# EUROPÄISCHE PATENTSCHRIFT

(11) **EP 2 660 182 B1**
(45) Veröffentlichungstag und Bekanntmachung des Hinweises auf die Patenterteilung: **08.02.2017**
(21) Anmeldenummer: 13002230.4
(22) Anmeldetag: 26.04.2013
(51) Int. Cl.: B23P 19/06, B66C 9/04, B66C 23/18, B66F 19/00

(54) **Hebe- und Transportvorrichtung**
Lifting and transporting device
Dispositif de levage et de transport

(30) Priorität: 02.05.2012 DE 102012009255
(43) Veröffentlichungstag der Anmeldung: 06.11.2013
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Paustian, Othmar

(56) Entgegenhaltungen:
- JP-A- H08 122 479
- JP-A- 2012 057 690
- US-A- 4 297 923
- US-A- 4 883 185
- US-A- 5 582 503
- US-A1- 2009 304 487

## Beschreibung

Die Erfindung bezieht sich auf eine Hebe- und Transportvorrichtung zum Heben einer Last und deren Transport quer zur Hebelrichtung, zur Verwendung beim Herstellen einer geschraubten Flanschverbindung, um einen Schraubenspannzylinder von einer Schraubverbindung anzuheben und zur nächsten Schraubverbindung zu transportieren gemäß dem Oberbegriff des Anspruchs 1.

Eine solche Vorrichtung ist aus der JP 08122479 bekannt.

Bei der Herstellung vorgespannter Schraubverbindungen werden häufig Schraubenspannzylinder eingesetzt, um auf die Schraubenbolzen eine genau definierte Vorspannkraft aufzubringen, insbesondere bei großen Schraubenbolzen ab etwa M16. Dabei wird üblicherweise zunächst der Schraubenbolzen durch die miteinander fluchtenden Durchgangsbohrungen in den miteinander zu verbindenden Bauteilen gesteckt, bis der Bolzenkopf auf der einen Seite der zu verbindenden Bauteile anliegt. Der Schraubenbolzen durchläuft frei die Durchgangsbohrungen und ragt mit seinem Bolzenende über die andere Seite der miteinander zu verbindenden Bauteile um ein vorgegebenes Maß hinaus. Auf dieses mit einem Gewinde versehene Bolzenende wird eine Mutter per Hand aufgeschraubt, bis sie an der Bauteiloberfläche anliegt. Die Länge des Schraubenbolzens ist so dimensioniert, dass in diesem nicht vorgespannten Zustand das Bolzenende um eine vorgegebene Länge über die Mutter übersteht. Auf das Bolzenende und die Mutter wird nun ein Schraubenspannzylinder gesetzt, der beispielsweise hydraulisch betrieben wird und mit dem die festgelegte Vorspannkraft auf den Schraubenbolzen aufgebracht wird, indem dieser gelängt wird. Nach Erreichen der festgelegten Vorspannkraft wird die Mutter beigedreht, bis sie wieder an der Bauteiloberfläche anliegt, und dann der Schraubenspannzylinder entlastet. Danach wird der Schraubenspannzylinder auf die nächste Schraubverbindung, d. h. auf den nächsten vorzuspannenden Schraubenbolzen, umgesetzt.

Die Verbindung von Bauteilen erfolgt in der Regel mittels mehrerer einzelner Schraubverbindungen. Sollen z. B. im Behälterbau zylinderförmige Bauteile stumpf miteinander verschraubt werden, so erfolgt dies üblicherweise mittels einer geschraubten ringförmigen Flanschverbindung. Von den Enden der zylinderförmigen Bauteile ragt quer zur Zylinderachse radial nach außen jeweils ein kreisringförmiger umlaufender Flansch vor, die beide mittels einer umlaufenden Reihe von Schraubverbindungen miteinander verschraubt werden. Die Stoßfuge und damit die Flansche verlaufen üblicherweise horizontal, da dann die Bauteile aufeinander gesetzt werden können, ohne dass Abstützungen quer zur Zylinderachse erforderlich sind; dabei ragen die Bolzenenden aus der Flanschoberseite vor und sitzt dementsprechend der Schraubenspannzylinder auf der Flanschoberseite. Die Arbeitsbühne für die Monteure ist so angeordnet, dass die Flansche in Hüft- bis Brusthöhe der Monteure liegen, damit sie die Schraubenbolzen und Muttern in optimaler Arbeitshaltung bequem montieren und auch den Schraubenspannzylinder bequem betätigen können. Für das Umsetzen des Schraubenspannzylinders zur nächsten Schraubverbindung ist diese Anordnung jedoch äußerst ungünstig. Die Schraubenspannzylinder haben ab einer Größe von M42 ein relativ hohes Gewicht. Die Schraubenspannzylinder werden entweder per Hand versetzt mit horizontal vom Oberkörper weggestreckten Armen, was äußerst kräftezehrend ist. Oder es wird eine Leiter benutzt, um die Schraubenspannzylinder von oben greifen zu können, was jedoch zum einen das jeweilige Holen und wieder Wegstellen der Leiter und damit zusätzlichen Zeitaufwand und zum anderen einen ausreichenden Freiraum oberhalb des Schraubenspannzylinders erfordert. Denkbar ist auch der Einsatz eines Krans, was jedoch einen nach oben durchgängig freien Raum über den Schraubverbindungen erfordert und einen äußerst hohen technischen Aufwand bedeutet.

Ausgehend hiervon liegt der Erfindung die Aufgabe zugrunde, ein Versetzen von Lasten, wie z. B. Arbeitsgeräten, bei beengten Platzverhältnissen zu erleichtern.

Erfindungsgemäß wird diese Aufgabe durch eine Vorrichtung gemäß Anspruch 1 gelöst. Mit einer erfindungsgemäßen Vorrichtung können Lasten auf einfache und bequeme Weise unter horizontalem Zugriff von nur einer Seite aus entlang von Wänden bzw. allgemein oberhalb der Lastaufstandsfläche sich quer zur Heberichtung erstreckenden Abstützungen horizontal versetzt werden. Es sind keinerlei Hilfsmittel oder An-, Ab- oder Umbaumaßnahmen erforderlich. Dadurch, dass die Hubeinrichtung quer zur Heberichtung neben dem Lastraum an dem Rahmen befestigt ist, wird dieser horizontale Zugriff von nur einer Seite aus ermöglicht. Unter dem Begriff "Lastraum" wird hier der Raum verstanden, der von der Last eingenommen wird. Mit dieser Anordnung der Hubeinrichtung ist auch eine manuelle Betätigung der Hubeinrichtung in der ergonomisch angepassten Arbeitsstellung möglich, in der mit der Last - z. B. mit einem Arbeitsgerät - üblicherweise gearbeitet wird, beispielsweise im Stehen in Höhe des Oberkörpers. Zudem erlaubt die erfindungsgemäße Anordnung der Hubeinrichtung den Einsatz der Hebe- und Transportvorrichtung bei geringer Bauhöhe, da über der Last kein Freiraum zur Unterbringung der Hubeinrichtung erforderlich ist. Erfindungsgemäß ist die Hebe- und Transportvorrichtung auf einem ersten und einem zweiten Auflager gelagert, deren Auflagerichtungen jeweils senkrecht zur Transportrichtung und zueinander in einem vorgegebenen Winkel verlaufen, wodurch die Elemente, neben denen die Last steht und die die Beengung der Platzverhältnisse verursachen, wie beispielsweise eine Wand, als Abstützung für die Hebe- und Transportvorrichtung genutzt werden können. Durch die Anordnung eines Abstandes zwischen den Auflagern sowohl in Heberichtung als auch senkrecht zur Transportrichtung und zur Heberichtung ist die Ableitung auch großer Drehmomente, die durch die Anordnung der Hubeinrichtung quer zur Heberichtung neben dem Lastraum eventuell auftreten und um eine Drehachse in Transportrichtung drehen, ohne weiteres möglich. Dabei können durch Ausbildung ausreichend großer Abstände Horizontalkräfte in den Lagern relativ gering gehalten werden.

Vorzugsweise weist jedes Auflager zwei Gleitelemente oder zwei Rollen auf, die in Transportrichtung vor und hinter dem Lastraum angeordnet sind. Hierdurch wird die Kippgefahr in Transport-richtung erheblich verringert. Zudem können die einzelnen Gleitelemente oder Rollen geringer dimensioniert werden.

In einer günstigen Weiterbildung der Erfindung verlaufen die Auflagerichtungen senkrecht zueinander. Diese Ausführungsform ist zum Versetzen von Lasten längs einer Wand geeignet, die senkrecht hinter einer Last von der Lastaufstandsfläche aufragt. Dabei liegt bevorzugt ein Auflager oberhalb der Last an der Wand an, während das andere Auflager auf der der Wand abgewandten Seite der Last neben dieser an der Fläche anliegt, in der die Lastaufstandsfläche liegt.

In vorteilhafter Ausgestaltung der Erfindung weist die Hubeinrichtung einen Hebel auf, der am Rahmen um eine erste Verschwenkachse verschwenkbar befestigt ist, die senkrecht zur Heberichtung verläuft, mit einem ersten Hebelabschnitt, der sich von der Verschwenkachse aus auf der Lastraumseite des Rahmens erstreckt und an dem die Halterungseinrichtung um eine zweite Verschwenkachse verschwenkbar befestigt ist, die zur ersten Verschwenkachse parallel verläuft, und mit einem zweiten Hebelabschnitt, der von der Verschwenkachse aus sich vom Lastraum wegerstreckt und einen Handgriff zur Betätigung des Hebels aufweist. Mit diesen Maßnahmen kann die Hubeinrichtung konstruktiv einfach ausgebildet und auch sehr einfach betätigt werden. Aufgrund der gelenkigen Befestigung des Hebels an dem Rahmen wird durch die Last kein Biegemoment oder nur ein geringes Biegemoment aus einer eventuellen Exzentrizität zwischen Verschwenkachse und Rahmenachse in den Rahmen eingeleitet, sodass die Biegebeanspruchung des Rahmens deutlich reduziert ist. Zudem muss nur der Hebel mittels des Handgriffs verschwenkt werden, um die Last anzuheben oder abzusetzen.

Bevorzugt erstreckt sich dabei der Hebel senkrecht oder parallel zur Transportrichtung. Auf diese Weise kann eine Anpassung an die jeweiligen Platzverhältnisse erfolgen. Zudem wird die Geometrie und damit die Herstellung der Hubeinrichtung dadurch weiter vereinfacht.

Vorteilhafterweise ist der zweite Hebelabschnitt teleskopierbar. Auf diese Weise kann die Lage des Handgriffes relativ zum Rahmen und damit die Hebelarmlänge vom Handgriff bis zur Verschwenkachse am Rahmen im Hinblick auf eine möglichst bequeme Betätigung der Hubeinrichtung eingestellt werden, und dies auf einfache und schnelle Weise.

In einer bevorzugten Ausführungsform der Erfindung weist der Rahmen zwei gleiche Rahmenteile auf, die in Transportrichtung vor und hinter dem Lastraum angeordnet sind. Mit diesen Maßnahmen ist der Lastraum von oben zugänglich, sodass beispielsweise ein Arbeitsgerät auf seiner Oberseite an eine Steuereinrichtung oder Versorgungseinrichtung angeschlossen werden kann und die Anschlussleitungen zwischen den beiden Rahmenteilen aus dem Lastraum heraus- bzw. in diesen hineingeführt werden.

Vorzugsweise ist der Rahmen senkrecht zur Transportrichtung L-förmig ausgebildet und sind die Auflager an den freien Enden des L angeordnet. In diesem Fall können Höhe und Breite der Hebe- und Transportvorrichtung über lediglich eine geeignete Dimensionierung der Schenkellängen des L festgelegt werden. Die Herstellung der Hebe- und Transportvorrichtung wird mit einer solchen Ausbildung erheblich vereinfacht.

Wenn der Rahmen zwei oder mehr gleiche L-förmige Rahmenteile aufweist, ist vorteilhafterweise an jedem freien Ende der L-förmigen Rahmenteile eine Rolle oder ein Gleitelement angeordnet. Hierdurch wird eine möglichst gleichmäßige Lastverteilung bei möglichst geringen Abmessungen der Rollen oder Gleitelemente erzielt.

Vorzugsweise erstreckt sich der lange Schenkel des L in Heberichtung und ist an ihm das Verschwenklager für den Hebel sowie das erste Auflager befestigt, wobei dessen Auflagerichtung in Heberichtung verläuft. Dadurch, dass das Verschwenklager für den Hebel an dem sich in Heberichtung erstreckenden Schenkel des L befestigt ist, wird dieser Schenkel kaum durch ein Biegemoment infolge der Last beansprucht - allenfalls durch ein Exzentrizitätsmoment aufgrund eines eventuellen Abstandes der Verschwenkachse von der Schenkellängsachse, sondern zum weitaus überwiegenden Teil durch eine Längskraft in Richtung der Längsachse dieses Schenkels. Wenn dieser Schenkel zudem der lange Schenkel des L ist, ist ausreichend Platz zur Befestigung des Verschwenklagers vorhanden.

Vorzugsweise ist das zweite Auflager am Ende des kurzen Schenkels des L angeordnet und ein drittes Auflager, dessen Auflagerichtung dieselbe ist wie die des zweiten Auflagers, am Ende des langen Schenkels des L angeordnet. Mit dieser Maßnahme wird durch das zweite und das dritte Auflager ein Auflagerpaar geschaffen, mit dem Drehmomente um die Transportrichtung in beiden Drehrichtungen aufgenommen werden können.

Bei einer Hebe- und Transportvorrichtung, die beim Herstellen einer geschraubten Flanschverbindung verwendet wird, um einen Schraubenspannzylinder von einer Schraubverbindung anzuheben und zur nächsten Schraubverbindung zu transportieren, wobei der Flansch sich horizontal erstreckt, ist das erste Auflager zur Anlage an der Oberseite des Flansches zwischen Schraubverbindung und Flanschkante und das zweite Auflager zur Anlage oberhalb der Schraubverbindung an eine vom Flansch aufgehende Bauteilwand ausgelegt. Eine solche Hebe- und Transportvorrichtung kann von der Seite der Flanschkante aus leicht von einem Monteur auf die Oberseite des Flansches über Schraubverbindung und Schraubenspannzylinder gesetzt werden. Die Halterungseinrichtung wird an dem Schraubenspannzylinder befestigt und kann dort während des Vorspannes des Schraubenbolzens befestigt bleiben. Nachdem das Vorspannen des Schraubenbolzens bei dieser Schraubverbindung abgeschlossen ist, kann der Schraubenspannzylinder von der Flanschkante aus mit der Hubeinrichtung vom Schraubenbolzenende und der Schraubenmutter soweit abgehoben werden, dass die Unterkante des Schraubenspannzylinders oberhalb der Oberkante des Schraubenbolzenendes liegt. Die Hebe- und Transportvorrichtung mit dem an ihr befestigten Schraubenspannzylinder wird nun mittels der Gleitelemente oder Rollen der Auflager zur benachbarten, noch vorzuspannenden Schraubverbindung verfahren. Dort wird der Schraubenspannzylinder mittels der Hubeinrichtung wieder auf das Schraubenbolzenende und die Schraubenmutter abgesetzt. Dieses Versetzen erfolgt in derselben Arbeitsstellung bzw. -haltung, in der auch die Schraubenbolzen in die Durchgangsbohrungen der Flanschverbindung eingesetzt und die Schraubenmuttern per Hand aufgeschraubt werden. Der Kraftaufwand für das Versetzen des Schraubenspannzylinders ist dabei sehr gering, da lediglich die Hubeinrichtung betätigt und die Hebe- und Transportvorrichtung verschoben werden muss.

Vorzugsweise ist dabei das dritte Auflager zur Anlage an die Flansch-Stirnseite ausgelegt. Hierdurch wird die Kippstabilität weiter erhöht, ohne dass dafür Raum auf der Oberseite des Flansches erforderlich ist.

Vorzugsweise weist die Hebe- und Transportvorrichtung ein Hilfs-Auflager auf, das in Transportrichtung vor und hinter dem Lastraum angeordnet und am Rahmen befestigt ist und zum Hintergreifen der benachbarten Schraubverbindungen ausgebildet ist. Mit dieser Maßnahme wird ein unbeabsichtigtes Herunterrutschen bzw. Abstürzen der Hebe- und Transportvorrichtung von der Oberseite des Flansches verhindert.

Die Erfindung wird nachfolgend anhand der Zeichnungen beispielshalber noch näher erläutert. Es zeigen:
- Figur 1: in einer Perspektivansicht eine Ausführungsform einer erfindungsgemäßen Hebe- und Transportvorrichtung, die beim Herstellen einer geschraubten Flanschverbindung eingesetzt wird;
- Figur 2: eine Vorderansicht der Hebe- und Transportvorrichtung aus Figur 1;
- Figur 3: eine Seitenansicht der Hebe- und Transportvorrichtung aus Figur 1;
- Figur 4: eine Draufsicht auf die Hebe- und Transportvorrichtung aus Figur 1;
- Figur 5: in einer Perspektivansicht die Hebe- und Transportvorrichtung aus Figur 1, eingesetzt beim Herstellen einer geschraubten Flanschverbindung; und
- Figur 6: eine Vorderansicht zur Perspektivansicht in Figur 5.

Nachfolgend wird die Erfindung zwar anhand des Einsatzes zusammen mit einem Schraubenspannzylinder beschrieben. Durch einfache konstruktive Änderungen ist eine erfindungsgemäße Hebe- und Transportvorrichtung jedoch für jedes andere automatische oder manuelle Werkzeug einsetzbar.

Die in den Figuren dargestellte Ausführungsform einer erfindungsgemäßen Hebe- und Transportvorrichtung 1 weist einen Rahmen 2, eine Halterungseinrichtung 3, eine Hubeinrichtung 4, erste, zweite und dritte Auflager 5, 6, 7 sowie ein Hilfs-Auflager 8 auf. Die Heberichtung ist mit 9 und die Transportrichtung mit 10 bezeichnet.

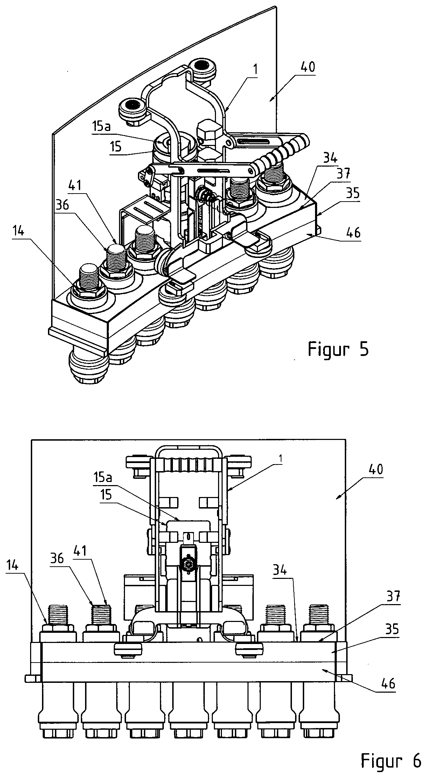

Der Rahmen 2 ist aus zwei L-förmigen Rahmenteilen 11, 12 gebildet, die in Transportrichtung 10 vor und hinter einem Lastraum 13 angeordnet sind und sich senkrecht zur Transportrichtung 10 neben und oberhalb des Lastraums 13 erstrecken. Der lichte Abstand zwischen den beiden Rahmenteilen 11, 12 ist im dargestellten Ausführungsbeispiel zur Aufnahme einer Schraubenmutter 14 und eines auf diese aufgesetzten Schraubenspannzylinders 15 ausgelegt (Figuren 5 und 6). Der lange Schenkel 16 des L erstreckt sich in vertikaler Richtung über die Oberseite 15a des aufzunehmenden Schraubenspannzylinders 15 hinaus. Der kurze Schenkel 17 des L erstreckt sich horizontal oberhalb der Oberseite 15a des aufzunehmenden Schraubenspannzylinders 15. Die freien Enden der beiden langen L-Schenkel 16 sind durch einen unteren Querriegel 18 und die freien Enden der beiden kurzen L-Schenkel 17 durch einen oberen Querriegel 19 miteinander verbunden.

Im oberen Endbereich der langen L-Schenkel 16 ist als Hubeinrichtung 4 ein Hebel 20 um eine erste Verschwenkachse 21 gelenkig gelagert. Der Hebel 20 ist U-förmig ausgebildet, wobei jeder Schenkel 22 des U sich senkrecht zur Transportrichtung 10 erstreckt und an einem der langen L-Schenkel 16 mittels eines ersten Verschwenklagers 23 befestigt ist. Die Basis des U bildet einen Griff 24, mit dem der Hebel 20 betätigbar ist.

Jeder Schenkel 22 des U weist einen ersten Hebelabschnitt 25 auf, der sich vom Verschwenklager 23 zur Lastraumseite hin erstreckt, und einen zweiten Hebelabschnitt 26 auf, der sich von dem Verschwenklager 23 aus zur dem Lastraum 13 abgewandten Seite hin erstreckt und an dessen freien Ende der Griff 24 befestigt ist.

Die zweiten Hebelabschnitte 26 wiederum sind jeweils aus zwei Teilen 27, 28 gebildet, die in Längsrichtung der zweiten Hebelabschnitte 26 gegeneinander verschiebbar sind, sodass die zweiten Hebelabschnitte 26 als Teleskop ausgebildet sind und ihre Länge veränderbar ist.

Jeder zweite Hebelabschnitt 26 weist eine erste (nicht dargestellte) Arretiervorrichtung auf, mit der er in der gewünschten Länge verriegelt werden kann, d. h. mit der die beiden Teile 27, 28 jedes zweiten Hebelabschnitts 26 in einem gewünschten, zueinander verschobenen Zustand arretiert werden können.

An den freien Enden der ersten Hebelabschnitte 25 ist jeweils eine Halterung 3 angebracht, die an einem Schraubenspannzylinder 15 befestigt werden kann. Die Halterungen 3 sind in den ersten Hebelabschnitten 25 jeweils mittels eines zweiten Verschwenklagers 30 gelagert, dessen (zweite) Verschwenkachse 31 zur ersten Verschwenkachse 21 parallel verläuft.

An den beiden Enden des unteren Querriegels 18 ist jeweils eine erste Laufrolle 32 drehbar befestigt, deren Drehachse 33 horizontal und senkrecht zur Transportrichtung 10 verläuft. Beide erste Laufrollen 32 bilden gemeinsam ein erstes Laufrollenpaar. Es ist zur Anlage an der Oberseite 34 eines Flansches 35 ausgelegt (Figuren 5 und 6) und bildet das erste Auflager 5 aus. Dessen Auflagerichtung 5a verläuft senkrecht zur Transportrichtung 10 in Heberichtung 9. Diese Laufrollen 32 liegen an der Oberseite 34 des Flansches 35 zwischen den Schraubverbindungen 36 und der Flanschkante 37 an, sodass sie beim Weiterrollen zur benachbarten Schraubverbindung 36 zwischen den Schraubenmuttern 14 und der Flanschkante 37 abrollen können.

An den freien Enden der beiden kurzen L-Schenkel 17 ist jeweils eine zweite Laufrolle 38 um eine Drehachse 39 drehbar gelagert, die vertikal und senkrecht zur Transportrichtung 10 verläuft. Gemeinsam bilden sie ein zweites Laufrollenpaar aus. Es ist zur horizontalen Anlage an eine vom Flansch 35 senkrecht aufgehende Bauteilwand 40 ausgelegt (Figuren 5 und 6) und bildet das zweite Auflager 6. Dessen Auflagerichtung 6a verläuft senkrecht zur Transportrichtung 10 und senkrecht zur Heberichtung 9, d. h. senkrecht zur Auflagerichtung 5a. Die Laufrollen 38 liegen oberhalb des Endes des Schraubenbolzens 41 an der Bauteilwand 40 an und können so ungehindert in Transportrichtung 10 auf der Bauteilwand 40 abrollen. Die zweiten Laufrollen 38 sind quer zur Transportrichtung 10 horizontal in jeweils einem Langloch um ein vorgegebenes Maß verschiebbar, um eine sichere Anlage an der Bauteilwand 40 zu gewährleisten. Mittels einer zweiten (nicht dargestellten) Arretiervorrichtung sind sie in ihrer gewünschten horizontalen Position arretierbar.

Das erste und das zweite Laufrollenpaar, d. h. das erste und das zweite Auflager 5, 6, weisen zueinander einen Abstand in Heberichtung 9 auf, der im wesentlichen der Länge der langen L-Schenkel 16 entspricht. Ihr Abstand senkrecht zur Transportrichtung 10 und zur Heberichtung 9 entspricht im wesentlichen der Länge der kurzen L-Schenkel 17.

Ferner ist an den beiden Enden des unteren Querriegels 18 noch jeweils eine dritte Laufrolle 44 drehbar befestigt, deren Drehachse 45 vertikal und senkrecht zur Transportrichtung 10 verläuft. Dieses dritte Laufrollenpaar ist zum horizontalen Anlegen an die Flansch-Stirnseite 46 ausgelegt (Figuren 5 und 6) und bildet das dritte Auflager 7 aus. Dessen Auflagerichtung 7a verläuft parallel zur Auflagerichtung 6a des zweiten Auflagers 6. Auch diese Laufrollen 44 sind quer zur Transportrichtung 10 horizontal in jeweils einem Langloch 47 verschiebbar, um eine Anlage an der Flansch-Stirnseite 46 zu gewährleisten. Mittels einer dritten (nicht dargestellten) Arretiervorrichtung sind sie in ihrer gewünschten horizontalen Position arretierbar.

An den langen L-Schenkeln 16 ist zwischen dem ersten Verschwenklager 23 und ihrem unteren Ende jeweils noch ein Hilfs-Auflager 8 befestigt, das zum Hintergreifen der Schraubverbindungen 36 ausgelegt ist, die dem vorzuspannenden Schraubenbolzen benachbart sind. Diese Hilfs-Auflager 8 sind in Form eines rechten Winkels 49 mit im dargestellten Fall näherungsweise gleich langen Schenkeln 50 ausgebildet. Die Hilfs-Auflager 8 sind in ihrer horizontalen Position jeweils in einem Langloch 51 verstellbar, um ihre sichere Anlage an den benachbarten Schraubverbindungen 36 zu gewährleisten. Sie sind in ihrer gewünschten horizontalen Position mittels einer vierten (nicht dargestellten) Arretiervorrichtung arretierbar.

Der untere Querriegel 18 weist in seiner Längsrichtung mittig eine U-förmige, zum Lastraum 13 hin offene Ausbuchtung 53 auf, durch die ein Werkzeug hindurchführbar ist, um die Schraubenmutter 14 im gelängten Zustand des Schraubenbolzens 41 beizudrehen bis die Schraubenmutter 14 an der Oberseite 34 des Flansches 35 anliegt.

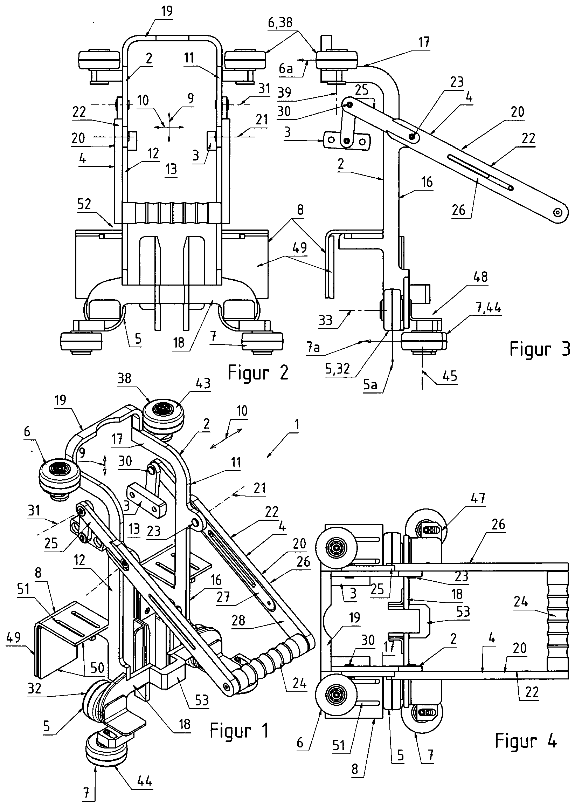

In den Figuren 5 und 6 ist die Hebe- und Transportvorrichtung 1 aus den Figuren 1 bis 4 im Einsatz bei der Herstellung einer geschraubten Flanschverbindung dargestellt, wobei hier nur der obere Flansch 35 dargestellt ist. Ein Schraubenspannzylinder 15 sitzt auf der Oberseite 34 des Flansches 35 und auf der Schraubenmutter 14 auf und steht mit dem Endbereich des Schraubenbolzens 41 in Krafteingriff. Die beiden L-förmigen Rahmenteile 11, 12 sind in Transportrichtung 10 beidseits des Schraubenspannzylinders 15 angeordnet. Das erste, zweite und dritte Laufrollenpaar 5, 6, 7 liegt an der Oberseite 34 des Flansches 35, an der Bauteilwand 40 bzw. an der Flansch-Stirnseite 46 an. Die beiden Hilfs-Auflager 8 hintergreifen die dem vorzuspannenden Schraubenbolzen 41 benachbarten Schraubverbindungen 36. Die Halterungseinrichtung 3 ist an dem Schraubenspannzylinder 15 befestigt und der Hebelgriff 24 ist in seiner oberen Position.

Der Schraubenbolzen 41 wird nun vorgespannt. Nach Beendigung des Spannvorganges wird der Schraubenspannzylinder 15 vom Bolzenende gelöst, der Hebelgriff 24 nach unten gezogen und damit die Halterungseinrichtung 3 und der an ihr befestigte Schraubenspannzylinder 15 soweit nach oben bewegt, dass die Unterkante des Schraubenspannzylinders 15 oberhalb des Schraubenbolzenendes liegt. Nun kann die Hebe- und Transportvorrichtung 1 und mit ihr der Schraubenspannzylinder 15 frei zur nächsten Schraubverbindung 36 verschoben bzw. gerollt werden und dort der Schraubenspannzylinder 15 auf die Schraubenmutter 14 gesetzt werden, indem der Griff 24 des Hebels 20 nach oben bewegt wird.

## Patentansprüche

1. Hebe- und Transportvorrichtung zum Heben einer Last und deren Transport quer zur Heberichtung, zur Verwendung beim Herstellen einer geschraubten Flanschverbindung, um einen Schraubenspannzylinder (15) von einer Schraubverbindung (36) anzuheben und zur nächsten Schraubverbindung (36) zu transportieren, wobei der Flansch (35) sich horizontal erstreckt, mit
einem Rahmen (2), der sich zur Aufnahme und zum Heben einer Last (15) um einen Lastraum (13) vorgegebener Größe herum erstreckt,
einer Halterungseinrichtung (3) zur Halterung der Last (15), wobei die Halterungseinrichtung (3) in Heberichtung (9) relativ zum Rahmen (2) bewegbar ist, und mit
einer Hubeinrichtung (4), die quer zur Heberichtung (9) neben dem Lastraum (13) an dem Rahmen (2) befestigt ist, einen sich auf dessen Lastraumseite erstreckenden Abschnitt (25) aufweist, an dem die Halterungseinrichtung (3) befestigt ist, und die zum Heben und Senken der Halterungseinrichtung (3) mit daran befestigter Last (15) eingerichtet ist,
wobei der Rahmen (2) auf einem ersten und einem zweiten Auflager (5, 6) gelagert ist, deren Auflagerichtungen (5a, 6a) jeweils senkrecht zur Transportrichtung (10) und zueinander unter einem vorgegebenen Winkel verlaufen und die sowohl in Heberichtung (9) als auch senkrecht zur Transportrichtung (10) und zur Heberichtung (9) zueinander einen Abstand aufweisen, und
wobei die Auflager (5, 6) Gleitelemente oder Rollen (32, 38) aufweisen, die in Transportrichtung (10) verschiebbar bzw. abrollbar sind,
**dadurch gekennzeichnet, dass** das erste Auflager (5) zur Anlage an der Oberseite (34) des Flansches (35) zwischen Schraubverbindung (36) und Flanschkante (37) und das zweite Auflager (6) zur Anlage oberhalb der Schraubverbindung (36) an eine vom Flansch (35) aufgehende Bauteilwand (40) ausgelegt ist.

2. Hebe- und Transportvorrichtung nach Anspruch 1, **dadurch gekennzeichnet, dass** jedes Auflager (5, 6) zwei Gleitelemente oder zwei Rollen (32, 38) aufweist, die in Transportrichtung (10) vor und hinter dem Lastraum (13) angeordnet sind.

3. Hebe- und Transportvorrichtung nach Anspruch 1 oder 2, **dadurch gekennzeichnet, dass** die Auflagerichtungen (5a, 6a) senkrecht zueinander verlaufen.

4. Hebe- und Transportvorrichtung nach einem der vorstehenden Ansprüche, **dadurch gekennzeichnet, dass** die Hubeinrichtung (4) einen Hebel (20) aufweist, der am Rahmen (2) um eine erste Verschwenkachse (21) verschwenkbar befestigt ist, die senkrecht zur Heberichtung (9) verläuft, mit einem ersten Hebelabschnitt (25), der sich von der ersten Verschwenkachse (21) aus auf der Lastraumseite des Rahmens (2) erstreckt und an dem die Halterungseinrichtung (3) um eine zweite Verschwenkachse (31) verschwenkbar befestigt ist, die zur ersten Verschwenkachse (21) parallel verläuft, und mit einem zweiten Hebelabschnitt (26), der von der ersten Verschwenkachse (21) aus sich vom Lastraum (13) wegerstreckt und einen Handgriff (24) zur Betätigung des Hebels (20) aufweist.

5. Hebe- und Transportvorrichtung nach Anspruch 4, **dadurch gekennzeichnet, dass** der Hebel (20) sich senkrecht oder parallel zur Transportrichtung (10) erstreckt.

6. Hebe- und Transportvorrichtung nach Anspruch 4 oder 5, **dadurch gekennzeichnet, dass** der zweite Hebelabschnitt (26) teleskopierbar ist.

7. Hebe- und Transportvorrichtung nach einem der vorstehenden Ansprüche, **dadurch gekennzeichnet, dass** der Rahmen (2) zwei gleiche Rahmenteile (11, 12) aufweist, die in Transportrichtung (10) vor und hinter dem Lastraum (13) angeordnet sind.

8. Hebe- und Transportvorrichtung nach einem der vorstehenden Ansprüche, **dadurch gekennzeichnet, dass** der Rahmen (2) senkrecht zur Transportrichtung (10) L-förmig ausgebildet ist und die Auflager (5, 6) an den freien Enden des L angeordnet sind.

9. Hebe- und Transportvorrichtung nach Anspruch 7 und 8, **dadurch gekennzeichnet, dass** an jedem freien Ende der L-förmigen Rahmenteile (11, 12) eine Rolle (32, 38) oder ein Gleitelement angeordnet ist.

10. Hebe- und Transportvorrichtung nach Anspruch 4 und 8 oder 9, **dadurch gekennzeichnet, dass** der lange Schenkel (16) des L sich in Heberichtung (9) erstreckt und an ihm das Verschwenklager (23) für den Hebel (20) sowie das erste Auflager (5) befestigt ist, wobei dessen Auflagerichtung (5a) in Heberichtung (9) verläuft.

11. Hebe- und Transportvorrichtung nach einem der Ansprüche 8 bis 10, **dadurch gekennzeichnet, dass** das zweite Auflager (6) am Ende des kurzen Schenkels (17) des L angeordnet ist und ein drittes Auflager (7), dessen Auflagerichtung (7a) dieselbe ist wie die (6a) des zweiten Auflagers (6), am Ende des langen Schenkels (16) des L angeordnet ist.

12. Hebe- und Transportvorrichtung nach Anspruch 1 und 11, **dadurch gekennzeichnet, dass** das dritte Auflager (7) zur Anlage an die Flansch-Stirnseite (46) ausgelegt ist.

13. Hebe- und Transportvorrichtung nach einem der vorstehenden Ansprüche, **gekennzeichnet durch** ein Hilfs-Auflager (8), das in Transportrichtung (10) vor und hinter dem Lastraum (13) angeordnet und am Rahmen (2) befestigt ist und zum Hintergreifen der benachbarten Schraubverbindungen (36) ausgebildet ist.

## Claims

1. A lifting and transporting device for lifting a load and for transporting the same transversely to the lifting direction, for use in manufacturing a screwed flange connection, in order to lift a bolt tensioning cylinder (15) from a screw bolt connection (36) and transport it to the next screw bolt connection (36), wherein the flange (35) extends horizontally, comprising
a frame (2) which for taking up and lifting a load (15) extends around a load space (13) of specified size,
a holding device (3) for holding the load (15), wherein the holding device (3) is movable in lifting direction (9) relative to the frame (2), and comprising
a lifting device (4) which is attached to the frame (2) transversely to the lifting direction (9) beside the load space (13), includes a portion (25) extending on its load space side, to which the holding device (3) is attached, and which is equipped for lifting and lowering the holding device (3) with attached load (15),
wherein the frame (2) is mounted on a first and a second support (5, 6) whose support directions (5a, 6a) each extend vertically to the transport direction (10) and at a specified angle to each other, and which both in lifting direction (9) and vertically to the transport direction (10) and to the lifting direction (9) have a distance to each other, and
wherein the supports (5, 6) include sliding elements or rollers (32, 38) which are shiftable or rollable in transport direction (10),
**characterized in that** the first support (5) is designed for abutment against the upper side (34) of the flange (35) between screw bolt connection (36) and flange edge (37) and the second support (6) is designed for abutment above the screw bolt connection (36) against a component wall (40) proceeding from the flange (35).

2. The lifting and transporting device according to claim 1, **characterized in that** each support (5, 6) includes two sliding elements or two rollers (32, 38) which in transport direction (10) are arranged before and behind the load space (13).

3. The lifting and transporting device according to claim 1 or 2, **characterized in that** the support directions (5a, 6a) extend vertically to each other.

4. The lifting and transporting device according to any of the preceding claims, **characterized in that** the lifting device (4) includes a lever (20) which is pivotally attached to the frame (2) about a first pivot axis (21) which extends vertically to the lifting direction (9), with a first lever portion (25) which extends from the first pivot axis (21) on the load space side of the frame (2) and to which the holding device (3) is pivotally attached about a second pivot axis (31) which extends parallel to the first pivot axis (21), and with a second lever portion (26) which from the first pivot axis (21) extends away from the load space (13) and includes a handle (24) for actuating the lever (20).

5. The lifting and transporting device according to claim 4, **characterized in that** the lever (20) extends vertically or parallel to the transport direction (10).

6. The lifting and transporting device according to claim 4 or 5, **characterized in that** the second lever portion (26) is telescopable.

7. The lifting and transporting device according to any of the preceding claims, **characterized in that** the frame (2) includes two identical frame parts (11, 12) which in transport direction (10) are arranged before and behind the load space (13).

8. The lifting and transporting device according to any of the preceding claims, **characterized in that** the frame (2) is formed L-shaped vertically to the transport direction (10) and the supports (5, 6) are arranged at the free ends of the L.

9. The lifting and transporting device according to claims 7 and 8, **characterized in that** at each free end of the L-shaped frame parts (11, 12) a roller (32, 38) or a sliding element is arranged.

10. The lifting and transporting device according to claims 4 and 8 or 9, **characterized in that** the long leg (16) of the L extends in lifting direction (9) and to the same the pivot bearing (23) for the lever (20) as well as the first support (5) are attached, whose support direction (5a) extends in lifting direction (9).

11. The lifting and transporting device according to any of claims 8 to 10, **characterized in that** the second support (6) is arranged at the end of the short leg (17) of the L and a third support (7), whose support direction (7a) is the same as that (6a) of the second support (6), is arranged at the end of the long leg (16) of the L.

12. The lifting and transporting device according to claims 1 and 11, **characterized in that** the third support (7) is designed for abutment against the flange end face (46).

13. The lifting and transporting device according to any of the preceding claims, **characterized by** an auxiliary support (8) which in transport direction (10) is arranged before and behind the load space (13) and is attached to the frame (2) and is formed to engage behind the adjacent screw bolt connections (36).

## Revendications

1. Dispositif de levage et de transport pour lever une charge et pour la transporter transversalement à la direction de levage, destiné à l'utilisation pour la réalisation d'un raccord de bridées vissées, afin de lever un vérin de serrage de vis (15) depuis un raccord vissé (36) et de le transporter jusqu'au prochain raccord vissé (36), la bride (35) s'étendant horizontalement, comportant
un cadre (2) qui s'étend autour d'un espace de charge (13) de taille prédéterminée, afin de recevoir et de lever une charge (15),
un moyen de retenue (3) pour retenir la charge (15), le moyen de retenue (3) étant mobile en direction de levage (9) par rapport au cadre (2), et comportant un moyen de levage (4)
qui est fixé sur le cadre (2) transversalement à la direction de levage (9) à côté de l'espace de charge (13),
qui comprend une portion (25) sur laquelle est fixé le moyen de retenue (3) et qui s'étend sur son côté tourné vers l'espace de charge,
et qui est conçu pour lever et abaisser le moyen de retenue (3) avec la charge (15) fixée sur celui-ci,
dans lequel le cadre (2) est monté sur un premier et sur un second support (5, 6) dont les directions de support (5a, 6a) s'étendent chacune perpendiculairement à la direction de transport (10) et sous un angle prédéterminé l'une par rapport à l'autre, et qui présentent une distance l'une de l'autre aussi bien en direction de levage (9) que perpendiculairement à la direction de transport (10) et à la direction de levage (9), et dans lequel les supports (5, 6) comprennent des éléments coulissants ou des rouleaux (32, 38) qui sont capables de coulisser ou de rouler en direction de transport (10), **caractérisé en ce que**
le premier support (5) est conçu pour l'appui sur la face supérieure (34) de la bride (35) entre le raccord vissé (36) et l'arête de bride (37), et le second support (6) est conçu pour l'appui au-dessus du raccord vissé (36) sur une paroi de composant structurel (40) qui part de la bride (35).

2. Dispositif de levage et de transport selon la revendication 1, **caractérisé en ce que** chaque support (5, 6) comprend deux éléments coulissants ou
deux rouleaux (32, 38) qui sont agencés devant et derrière l'espace de charge (13) en direction de transport (10).

3. Dispositif de levage et de transport selon la revendication 1 ou 2, **caractérisé en ce que** les directions de support (5a, 6a) s'étendent perpendiculairement l'une à l'autre.

4. Dispositif de levage et de transport selon l'une des revendications précédentes, **caractérisé en ce que** le moyen de levage (4) comprend un levier (20) qui est fixé sur le cadre (2) de manière à pouvoir basculer autour d'un premier axe de basculement (21) s'étendant perpendiculairement à la direction de levage (9), comportant une première portion de levier (25) qui s'étend depuis le premier axe de basculement (21) sur le côté du cadre (2) tourné vers l'espace de charge et sur laquelle est fixé le moyen de support (3) de manière à pouvoir basculer autour du second axe de basculement (31) qui est parallèle au premier axe de basculement (21), et comportant une seconde portion de levier (26) qui s'étend à partir du premier axe de basculement (21) en éloignement de l'espace de charge (13) et qui présente une poignée à main (24) pour actionner le levier (20).

5. Dispositif de levage et de transport selon la revendication 4, **caractérisé en ce que** le levier (20) s'étend perpendiculairement ou parallèlement à la direction de transport (10).

6. Dispositif de levage et de transport selon la revendication 4 ou 5, **caractérisé en ce que** la seconde portion de levier (26) est télescopique.

7. Dispositif de levage et de transport selon l'une des revendications précédentes, **caractérisé en ce que** le cadre (2) comprend deux parties de cadre égales (11, 12) qui sont agencées devant et derrière l'espace de charge (13) en direction de transport (10).

8. Dispositif de levage et de transport selon l'une des revendications précédentes, **caractérisé en ce que** le cadre (2) est réalisé en forme de L perpendiculairement à la direction de transport (10), et **en ce que** les supports (5, 6) sont agencés aux extrémités libres de la forme en L.

9. Dispositif de levage et de transport selon la revendication 7 et 8, **caractérisé en ce qu'**un rouleau (32, 38) ou un élément coulissant est agencé à chaque extrémité libre des parties de cadre (11, 12) en forme de L.

10. Dispositif de levage et de transport selon la revendication 4 et 8 ou 9, **caractérisé en ce que** la branche longue (16) de la forme en L s'étend en direction de levage (9), branche sur laquelle sont fixés le palier de basculement (23) pour le levier (20) ainsi que le premier support (5), sa direction de support (5a) s'étendant en direction de levage (9).

11. Dispositif de levage et de transport selon l'une des revendications 8 à 10, **caractérisé en ce que** le second support (6) est agencé à l'extrémité de la courte branche (17) de la forme en L, et un troisième support (7) dont la direction de support (7a) est la même que celle (6a) du second support (6) est agencé à l'extrémité de la branche longue (16) de la forme en L.

12. Dispositif de levage et de transport selon la revendication 1 et 11, **caractérisé en ce que** le troisième support (7) est conçu pour l'appui sur le côté frontal (46) de la bride.

13. Dispositif de levage et de transport selon l'une des revendications précédentes, **caractérisé par** un support auxiliaire (8) qui est agencé devant et derrière l'espace de charge (13) en direction de transport (10) et qui est fixé sur le cadre (2) et qui est conçu pour coiffer par l'arrière les raccords vissés (36) voisins.
